# FASCICULE DE BREVET EUROPEEN

(11) **EP 1 345 514 B1**
(45) Date de publication et mention de la délivrance du brevet: **05.01.2005**
(21) Numéro de dépôt: 01999303.9
(22) Date de dépôt: 30.11.2001
(51) Int. Cl.: A47G 19/34, G01F 11/26, B65D 83/06, B65D 5/76

(54) **DISPOSITIF DISTRIBUTEUR-DOSEUR**
DOSIERSPENDER
MEASURING AND DISPENSING DEVICE

(30) Priorité: 07.12.2000 CH 237800
(43) Date de publication de la demande: 24.09.2003
(73) Titulaire: Huguenin, Freddy, 2126 Les Verrières (CH)
(72) Inventeur: Huguenin, Freddy, 2126 Les Verrières (CH)
(74) Mandataire: Ganguillet, Cyril
(86) Numéro de dépôt international: PCT/CH2001/000691
(87) Numéro de publication internationale: WO 2002/045555

(56) Documents cités:
- FR-A- 1 289 650
- FR-A- 1 336 874
- GB-A- 158 960
- GB-A- 719 054
- GB-A- 736 834
- US-A- 1 141 368
- US-A- 1 640 156
- US-A- 2 190 092
- US-A- 4 109 830
- US-A- 4 562 940

## Description

La présente invention a pour objet un dispositif distributeur-doseur et notamment un tel dispositif prévu pour le dosage de produits en particules, tels que sucre, thé, café en grains ou en poudre, riz, etc., ce dispositif étant associé à un récipient rigide contenant ledit.

On connaît le traditionnel sucrier dispenseur à tube interne sur l'axe vertical. Ce sucrier, pratique pour les restaurants, ne fonctionne cependant pas ou très mal lorsqu'il est au trois quarts vide et doit de ce fait être rechargé très régulièrement. De plus, il brasse très fortement le sucre qu'il contient, du fait qu'il est nécessaire de retourner le sucrier de 180° pour déverser la dose. D'autre part, un dosage précis n'est pas facile à réaliser.

On connaît également d'autres dispositifs distributeur-doseur. On citera à ce propos les publications de brevets ou de demandes de brevet FR-A-2755431, GB-A-2115785, CH-A-656788 et US-A-4 109 830. Toutefois, les dispositifs décrits dans ces publications sont de conception relativement complexe, comportant un grand nombre de pièces, et en particulier des pièces mobiles, et ne répondent pas dans une mesure optimale aux besoins de la pratique.

En effet, la matière pulvérisée, granulaire ou poudreuse a un comportement difficile à maîtriser et qui varie selon son granulat, sa forme, sa composition, son hygrométrie, etc., et les poussoirs, tirettes ou tiroirs, godets et autres mécanismes dont sont munis les dispositifs connus sont sujets à des pannes ou blocages.

En fait, les grains, quelle que soit leur taille, peuvent se comporter, suivant les situations, comme un solide ou un liquide, voire comme un gaz.

Par conséquent, afin de maîtriser tant soit peu la situation, il est nécessaire de mettre en mouvement la matière contenue dans le récipient de façon à l'obliger à se comporter comme un fluide dont le comportement est prévisible quel que soit l'état de la matière concernée.

Le but de la présente invention est donc de créer un dispositif plus simple que les dispositifs connus, atteignant mieux le but visé et susceptible de réalisations correspondant à un design de qualité.

A cet effet, la présente invention concerne un dispositif distributeur-doseur selon la revendication 1.

On décrit en détail ci-après quelques formes d'exécution du dispositif de l'invention données à titre d'exemples et représentées aux figures du dessin annexé dont :
- la fig. 1 est une vue en élévation partiellement coupée selon un plan vertical montrant schématiquement un bocal muni d'un couvercle qui représente le principe d'une première forme d'exécution du dispositif selon l'invention,
- la fig. 2 est une vue d'en haut en coupe selon la ligne 1-1 de la fig. 1,
- la fig. 3 est une vue analogue à la fig. 2 montrant une deuxième forme d'exécution du dispositif, intégré à la base de la paroi cylindrique d'un bocal,
- la fig. 4 est une vue analogue à la fig. 1 montrant le dispositif de la fig. 3 en coupe verticale,
- la fig. 5 est une vue partiellement en élévation et partiellement en coupe selon la ligne A-A de la fig. 4 montrant l'obturateur du dispositif selon la deuxième forme d'exécution,
- la fig. 6 et la fig. 7 sont deux vues en coupe schématiques d'une troisième forme d'exécution du dispositif, ce dernier étant associé à un conteneur de recharge encore avec son opercule à la fig. 6 et sans l'opercule à la fig. 7,
- la fig. 8 est une vue en élévation montrant l'aspect extérieur de l'assemblage des fig. 6 et 7,
- les fig. 9 et 10 sont des coupes transversales d'un dispositif selon l'invention, illustrant son fonctionnement,
- les fig. 11 et 12 sont des coupes longitudinales du dispenseur de la fig. 7 illustrant respectivement le fonctionnement du dispenseur lorsqu'il est plein à la fig. 11 et presque vide à la fig. 12,
- la fig. 13 est une vue en élévation d'une quatrième forme d'exécution du dispositif selon l'invention,
- la fig. 14 est une vue en perspective éclatée des différentes parties du dispositif de la fig. 13,
- la fig. 15 est une vue en perspective d'une variante d'exécution de la partie distributeur-doseur du dispositif des fig. 13 et 14,
- les fig. 16 à 19 représentent une cinquième forme d'exécution du dispositif, respectivement en coupe selon la ligne B-B de la fig. 19, positions fermée et ouverte pour les fig. 16 et 17, en coupe selon la ligne A-A de la fig. 16 pour la fig. 18, et en plan de dessus pour la fig. 19,
- les fig. 20 et 21 représentent une sixième forme d'exécution respectivement en coupe et en plan de dessus analogues aux fig. 16 et 19,
- les fig. 22 à 24 sont des vues d'une septième forme d'exécution respectivement en coupe analogue aux fig. 16 et 20, en plan de dessus et en coupe selon la ligne A-A de la fig. 23 et
- les fig. 25 à 27 sont des vues en perspective schématique et partielle montrant une variante de la septième forme d'exécution.

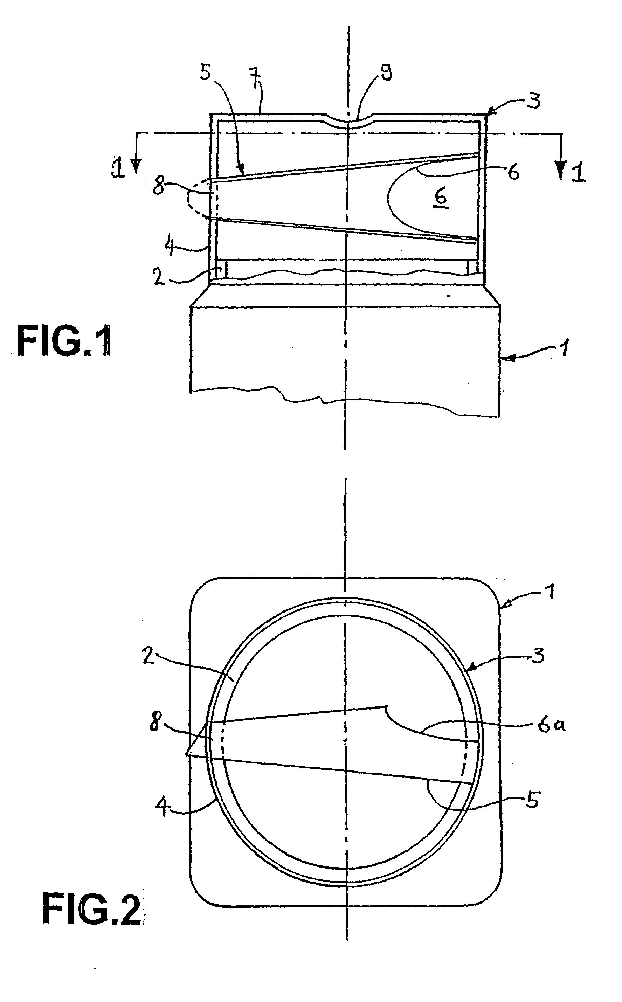

A la fig. 2, on voit un bocal en verre 1 de forme carrée en plan, avec à sa partie supérieure un col cylindrique 2. Un couvercle 3 est engagé sur le col 2 de manière à permettre l'ouverture et la fermeture du bocal par des moyens traditionnels. La paroi cylindrique 4 du couvercle 3 peut être ajustée en diamètre à la surface externe du col 2 ou bien ce dernier peut être muni d'un filetage sur lequel le couvercle se visse, ou tout autre moyen de fixation à ouverture et fermeture à volonté peut être prévu.

Un segment de tube de forme tronconique 5 est fixé à l'intérieur de la paroi 4, son axe étant horizontal ou légèrement incliné, montant vers la grande base du tronc de cône. En plan, cet axe s'étend selon un diamètre de la paroi cylindrique 4. L'extrémité du tube 5 correspondant à la grande base du tronc de cône est fixée contre la face interne de la paroi 4 mais présente à partir de cette paroi une échancrure 6 dont le contour 6a s'étend, selon le dessin des fig. 1 et 2, dans un plan de manière à former une ouverture d'entrée latérale dirigée vers la paroi du couvercle 3. A son extrémité de petit diamètre, le segment de tube ou conduit 5 traverse la paroi 4 tout en étant fixé dans l'ouverture circulaire 8 que cette paroi présente à cet endroit, de manière à former une ouverture de sortie. Ici, le tube 5, ou conduit du distributeur-doseur, présente un prolongement en forme de goulotte dont la fonction principale est non seulement de diriger le flux du produit, mais également et surtout d'indiquer dans quel sens il faut faire pivoter le dispenseur pour obtenir le meilleur résultat.

Afin de soutirer une dose du produit contenu dans le bocal, on placera de préférence le bocal en position horizontale. Il suffit alors de faire pivoter le bocal sur lui-même autour de son axe longitudinal pour qu'une certaine quantité des particules, qui se mettent alors à rouler les unes sur les autres, passe par l'ouverture 6 et s'engouffre dans le conduit distributeur-doseur 5, cette dose de particules pouvant ensuite sortir par l'ouverture 8, si l'on continue à faire pivoter le bocal sur lui-même.

Au cours de ce mouvement de pivotement, les particules sont mobilisées, elles se comportent comme un fluide et occupent tous les espaces libres. De plus, comme le bocal n'est pas renversé fond sur fond, le produit est moins brassé que dans un distributeur-doseur traditionnel.

Si l'on désire obtenir plusieurs doses, il suffit d'un tiers de tour de rotation inverse du bocal autour de son axe longitudinal, toujours en position horizontale, et à chaque fois, le doseur se recharge, sans qu'il soit nécessaire de redresser le bocal.

De plus, ce mode de fonctionnement autorise une grande précision dans la quantité de produit que l'on souhaite déverser, puisqu'il permet d'interrompre le flux de déversement à tout moment, en interrompant simplement le mouvement de rotation du bocal et/ou en l'inversant.

Afin de permettre une manipulation aisée du bocal, le couvercle représenté à la figure 1 comporte au centre de sa face supérieure une partie en creux 9 dans laquelle l'utilisateur peut avantageusement placer l'un des doigts d'une main autour duquel il fait pivoter le bocal dont il tient le fond dans son autre main.

Dans l'exemple des figures 1 et 2, le tube doseur tronconique est disposé dans le couvercle du bocal. Bien entendu, il est également possible de disposer ce tube à tout autre niveau du bocal et notamment à sa partie inférieure, directement à la base du bocal.

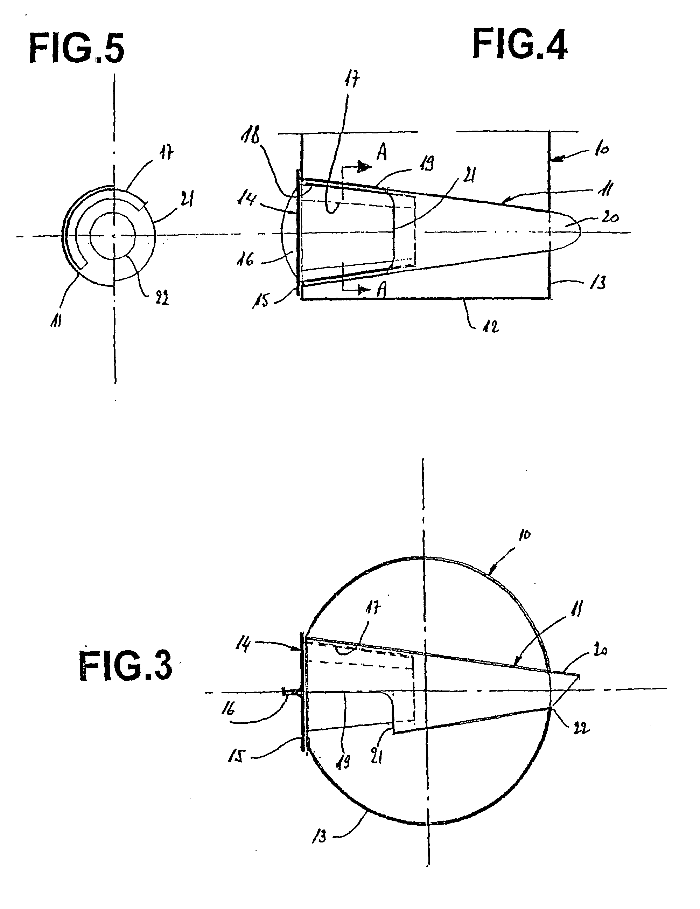

C'est ce que montrent les fig. 3, 4 et 5 qui se rapportent à une deuxième forme d'exécution de l'objet de l'invention. Le bocal 10 est ici de forme cylindrique et le conduit 11, également de forme tronconique est encore disposé avec son axe horizontal dans une orientation diamétrale par rapport au bocal mais à la base de ce dernier, au voisinage de son fond plat 12. Contrairement à la première forme d'exécution, la grande base du conduit 11 n'est pas entièrement fermée par la paroi 13 du bocal 10, mais celle-ci est pourvue d'une ouverture dans laquelle est engagé un obturateur coaxial au conduit 11, formé d'une plaque de fermeture circulaire 15 avec une nervure 16 pour son entraînement en rotation et d'un prolongement en forme de virole 17 tronconique comme le conduit 11. Un élément de clipsage 18 est prévu à la périphérie de la plaque 15 pour retenir l'obturateur 14 en place sur l'entrée du conduit 11. Celui-ci présente une échancrure latérale 19 délimitant une ouverture d'entrée, tandis que la virole 17 est interrompue sur une partie de son pourtour, sur la longueur de l'échancrure 19, de sorte que l'obturateur 14 permet, par la manoeuvre de la nervure 16, le dosage des quantités de produit à extraire du bocal 10. On voit aux fig. 3 et 4 le prolongement en forme de goulotte 20 de l'extrémité de sortie du conduit doseur 11. Comme dans le cas du bocal représenté aux fig. 1 et fig. 2, cette goulotte sert surtout à indiquer dans quel sens il faut faire pivoter le doseur. Le fond de cette goulotte est disposé latéralement, de même d'ailleurs que l'échancrure 19 pratiquée à l'extrémité d'entrée du conduit, ces deux éléments étant opposés. L'échancrure 19 coupe le conduit 11 selon un plan diamétral vertical depuis son extrémité de plus grand diamètre sur une longueur correspondant à l'importance que cette ouverture doit avoir, eu égard aux quantités à doser et au type de produit. Elle se termine par un arc de cercle 21 dans un plan perpendiculaire à l'axe du conduit 11. Comme on le voit aux fig. 4 et 5, l'obturateur rotatif 14 est également coupé selon un plan diamétral. Sa longueur est supérieure à celle de l'échancrure 19 et il est représenté au dessin dans une position oblique, obturant environ un quart de l'échancrure 19.

Par rotation de l'obturateur 14 au moyen de la nervure 16, on peut fermer entièrement l'ouverture d'entrée du conduit 11, délimitée par l'échancrure 19, 21, ce qui permet de poser le bocal 10 en position verticale normale.

Pour extraire une dose du produit contenu dans le bocal, il suffit de le disposer en positon horizontale, d'ouvrir l'ouverture d'entrée de la quantité voulue par manoeuvre de l'obturateur 14 et de faire couler la dose ainsi calibrée par l'ouverture de sortie 22 et la goulotte 20, en faisant pivoter le bocal autour de son axe longitudinal comme décrit plus haut.

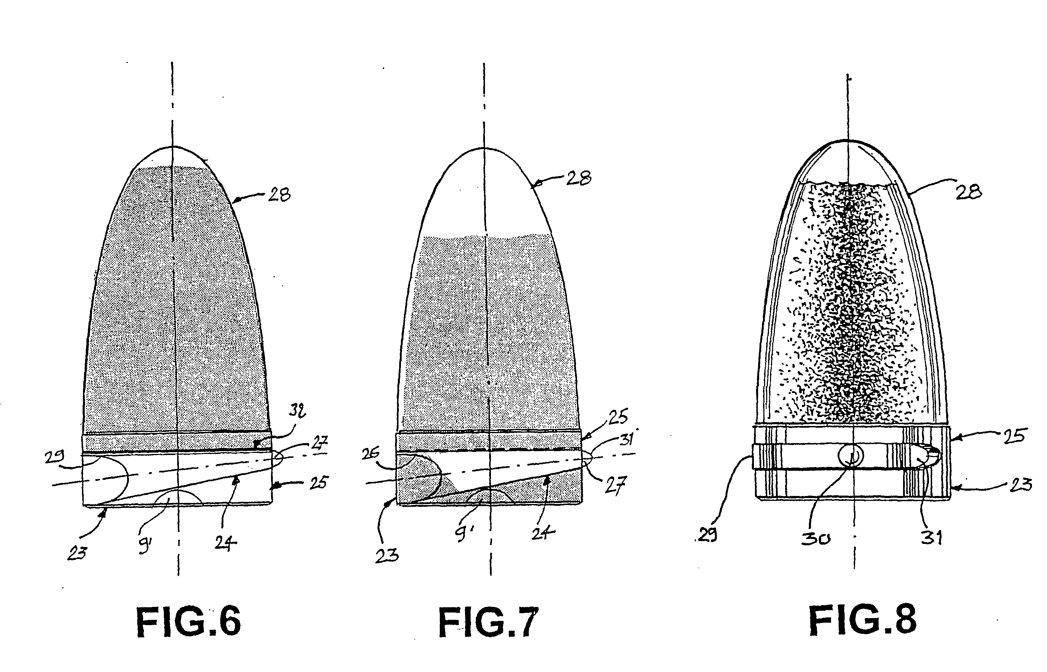

Une troisième forme d'exécution est représentée par les fig. 6 et 7 qui sont des vues en coupe verticale schématique et à la fig. 8 qui suggère une possibilité de réalisation de l'aspect extérieur de l'assemblage.

Ici, le dispositif distributeur-doseur 23 comporte un boîtier 25 à paroi latérale cylindrique et à fond plat qui peut être en verre, en matière plastique rigide ou éventuellement en métal, et un conduit distributeur-doseur 24 de forme tronconique disposé diamétralement dans le boîtier 25 avec son axe légèrement en oblique. La grande base du conduit est entièrement obturée de manière fixe par la paroi latérale du boîtier 25. Une échancrure 26 semblable à l'échancrure 6 ou 19, 21 est ménagée dans la paroi du conduit 24, de manière à former une ouverture intérieure de dimensions fixes, tandis que l'extrémité de petit diamètre du conduit est liée au pourtour d'une ouverture de sortie 27 ménagée dans la paroi du boîtier 25, ouverture que cette extrémité traverse en formant une goulotte 31 semblable à la goulotte 20. Le fond du dispositif 23 peut également comporter une partie en creux 9' ayant la même fonction que la partie en creux 9 du couvercle du bocal des fig. 1 et 2.

Le dispositif 23 est associé à un conteneur 28 de forme ogivale qu'on peut concevoir, par exemple, en une matière plastique transparente mince et présentant une certaine rigidité.

Un mode de réalisation judicieux consiste à conditionner le produit directement dans le conteneur 28, ce dernier étant rempli du produit et fermé à sa base par un opercule 32. Les boîtiers 25 seront équipés, à la partie supérieure de leur paroi, d'un moyen de fixation (non représenté) tel que pas de vis, baïonnette, engagement à cran ou à friction, clipsage, etc., moyen auquel correspondra une conformation complémentaire de la base des conteneurs 28. Ces derniers pourront, si nécessaire, être vendus séparément à titre de recharge. Après arrachement de l'opercule, le conteneur sera fixé par sa base sur le bord de la paroi latérale du dispositif distributeur-doseur 23. Tel que représenté à la fig. 6, le doseur ne peut pas fonctionner puisque l'opercule 32 ferme la base du conteneur. Lorsque l'opercule a été enlevé, le boîtier 25 remis en place et l'objet retourné, le produit contenu dans le conteneur descend dans le boîtier, ce qui ménage un espace libre dans le conteneur et évite que le produit ne soit trop tassé, comme représenté à la fig. 7. L'objet est alors prêt à fonctionner.

Comme le montre la fig. 8 les distributeurs-doseurs 23 seront de préférence équipés sur le côté extérieur de leur paroi latérale, d'un obturateur mobile 29 permettant de fermer ou d'ouvrir à volonté l'ouverture de sortie 27. Selon la fig. 8, ce dispositif peut être constitué d'une pièce élastique en arceau ouvert engagé dans une gorge en arc de cercle ménagée dans la paroi latérale du boîtier 25 et susceptible de tourner d'un certain angle autour de cette paroi, commandée par un bouton saillant 30. Une extrémité de l'arceau 29 se trouvera engagée dans la goulotte 31 lorsque l'obturateur 29 est en position de fermeture, et par conséquent, obturera l'ouverture 27, tandis que par un déplacement vers la gauche à la fig. 8 du bouton 30, cette ouverture sera découverte et par conséquent la dose contenue dans le conduit 24 pourra être déversée en faisant pivoter le distributeur. L'ouverture de sortie 27 peut également être obturée de manière étanche par tout autre système connu de fermeture à double battue ou à deux axes.

La forme d'exécution des fig. 6, 7 et 8 montre que les conteneurs tels que 28 et les distributeurs-doseurs tels que 23 peuvent être étudiés au point de vue de leur design, de façon à constituer des objets attractifs dans leur commercialisation.

D'autres réalisations sont encore possibles. Le conteneur peut être de forme conique ou galbée, ou sphérique selon la destination et le type de produit en particules à doser.

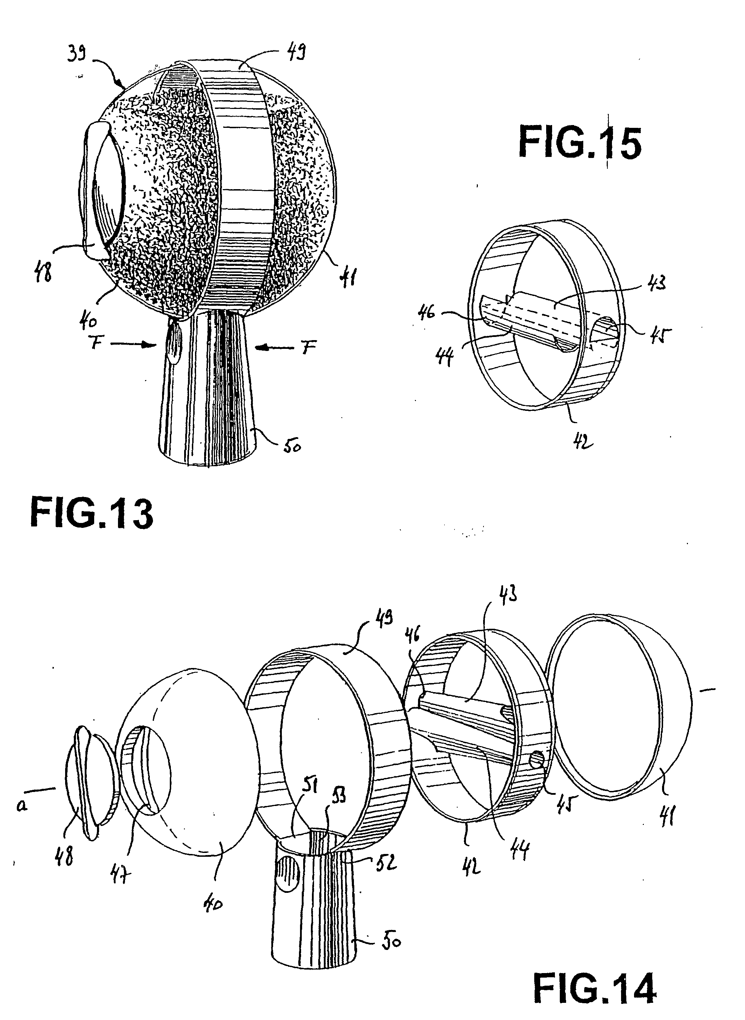

En particulier, une quatrième forme d'exécution de l'objet de l'invention est représentée aux fig. 13 à 15. Dans cette forme d'exécution, le conteneur 39 est constitué de trois parties principales, à savoir deux parties d'extrémité de forme hémisphérique 40, 41, reliées de part et d'autre à une partie centrale 42 de forme annulaire, à l'intérieur de laquelle sont disposés deux conduits distributeur-doseur 43, 44, placés diamétralement et tête-bêche l'un par rapport à l'autre. Ces deux conduits débouchent respectivement sur des ouvertures de sortie 45, 46, ménagées dans la partie annulaire 42 et diamétralement opposées.

L'une des parties hémisphériques 40 comporte une ouverture 47 munie d'un élément d'obturation 48 et destinée au remplissage du conteneur. Le conteneur 49 peut avantageusement être muni d'un obturateur 49 de forme annulaire et comportant une embase 50 servant de support au conteneur. Le diamètre intérieur de l'obturateur annulaire 49 est choisi sensiblement égal au diamètre extérieur de la partie centrale annulaire 42 du conteneur, de façon à bloquer les deux parties l'une par rapport à l'autre à l'état de repos comme on va le décrire ci-après. Le diamètre extérieur de la partie centrale annulaire 49 est quant à lui inférieur au diamètre extérieur des parties hémisphériques 40 et 41 de façon à constituer une gorge dans laquelle est placé l'obturateur annulaire 49.

Comme on le voit à la fig. 14, l'obturateur annulaire 39 est interrompu au niveau de l'élément d'embase 50 et fixé par ses deux bords 51, 52 à la partie supérieure dudit élément d'embase 50, ce dernier étant creux et présentant une ouverture 53 destinée au passage du produit contenu dans le conteneur. Comme représenté aux fig. 13 et 14, l'élément d'embase 50 est de section ronde, ovoïde ou de toute forme équivalente de façon que lorsque l'on comprime ledit élément dans le sens des flèches F visibles à la fig. 13, ledit élément d'embase s'allonge dans la direction perpendiculaire à la direction des flèches F et par conséquent les deux bords 51, 52 de l'obturateur annulaire 49 s'écartent sensiblement l'un de l'autre, ce qui augmente sensiblement le diamètre intérieur de l'obturateur annulaire et permet le déblocage du conteneur que l'on peut dès lors faire pivoter autour de son axe longitudinal a-a, de façon à amener l'une des ouvertures 45 ou 46 de la partie centrale annulaire 42 du conteneur en face de la partie creuse 53 de l'élément de base à travers de laquelle une dose du produit contenu dans le conteneur peut s'écouler.

Les conduits distributeur-doseur 43 et 44 représentés à la fig. 14 sont de forme conique. Selon une variante d'exécution, représentée à la fig. 15, ces conduits distributeur-doseur peuvent être de forme tubulaire à section constante, par exemple de forme semi-cylindrique.

La présence d'un obturateur permettant le réglage des doses, comme l'obturateur 14, n'est pas indispensable car dans les formes d'exécution des fig. 1 et 2, ou 6, 7, 8, le simple renversement ou un mouvement de rotation du récipient autour de son axe permet de faire entrer dans le conduit de distribution une dose relativement précise du produit à distribuer.

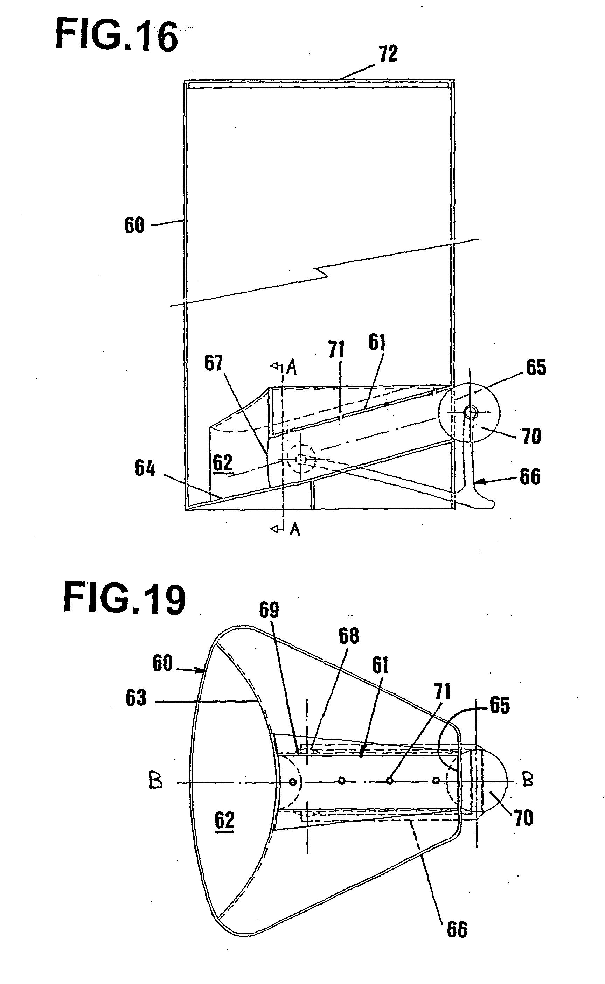

Les formes d'exécution représentées aux fig. 16 à 27, décrites ci-après, diffèrent des quatre premières par le fait que l'élément de conduit transversal ne s'étend plus entre deux points opposés de la paroi du récipient, mais débouche dans un logement de dosage qui est largement ouvert dans l'espace intérieur du récipient, l'obturateur étant disposé sur l'ouverture de sortie de l'élément de conduit. Avec ces formes d'exécution, le soutirage du produit contenu dans le bocal peut s'effectuer sans placer le bocal en position horizontale, mais simplement en l'inclinant. La quantité de produit que l'on soutire lors d'un pivotement n'est plus limitée à la seule dose contenue dans le conduit, mais peut être adaptée selon les besoins en laissant le bocal incliné plus ou moins longtemps.

Le dispositif distributeur-doseur de la cinquième forme d'exécution (fig. 16 à 19) est entièrement intégré à un récipient 60 en matière plastique rigide, ayant en plan une forme générale triangulaire et des parois verticales. Il est disposé à la base de ce récipient et comporte essentiellement un élément de conduit cylindrique transversal 61 qui s'ouvre à l'intérieur du récipient 60 par une ouverture d'entrée 67 dans un logement 62 délimité par une portion de paroi verticale incurvée convexe de la base triangulaire isocèle de ce récipient. Le fond du logement 62 est un plan oblique 64 qui s'étend dans le prolongement de la génératrice inférieure de l'élément de conduit 61, ladite génératrice s'étendant en montant selon une pente de l'ordre de 15 degrés, par exemple, entre l'ouverture d'entrée 67 et une ouverture de sortie 65 ménagée dans un segment de paroi verticale plane constituant le sommet tronqué du triangle isocèle de base du récipient 60.

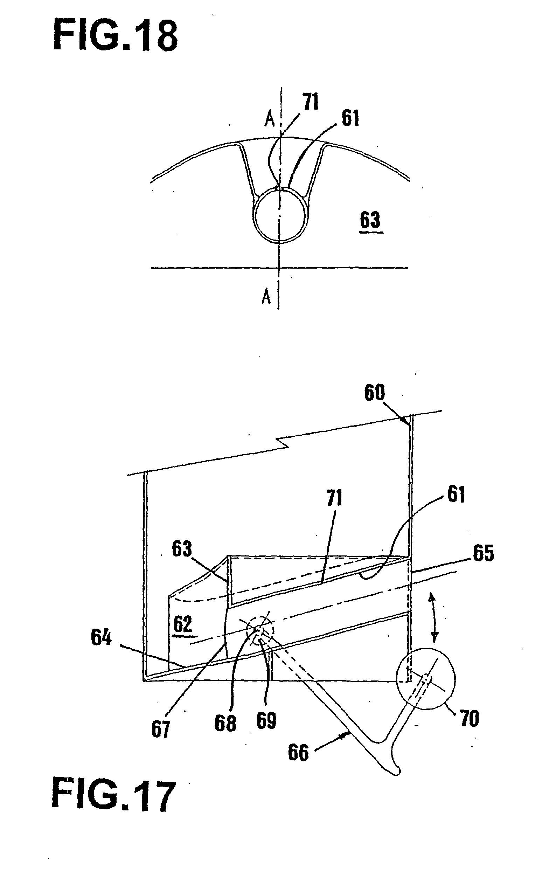

L'ouverture de sortie 65 est équipée d'un obturateur basculant 66, visible en position fermée à la fig. 16 et en position ouverte à la fig. 17. Cet obturateur est constitué d'un support en une pièce, en forme d'étrier avec deux branches parallèles munies de pivots 68 engagés dans des oeillets correspondants 69 venus de moulage dans les faces extérieures du conduit 61. Il comporte en outre une bille 70 en un matériau légèrement élastique qui est traversée par un axe rigide constituant l'élément de liaison prévu entre les deux branches de l'étrier 66 pour que ce dernier puisse pivoter sur les pivots coaxiaux 68 comme on le voit en comparant les fig. 16 et 17. Le support en forme d'étrier est conformé de façon à être en tension lorsqu'il est en position de fermeture; le diamètre de la bille 70 étant ajusté à celui de l'ouverture 65, on voit que celle-ci est fermée de manière étanche quand l'obturateur se trouve dans la position de la fig. 16.

On note encore que des orifices de petit diamètre 71 sont répartis de distance en distance le long de la génératrice supérieure du conduit cylindrique 61 pour éviter une reprise d'humidité par le produit à l'intérieur du seul conduit.

Le récipient 60 est fermé.normalement par un couvercle plat 72, à emboîtement.

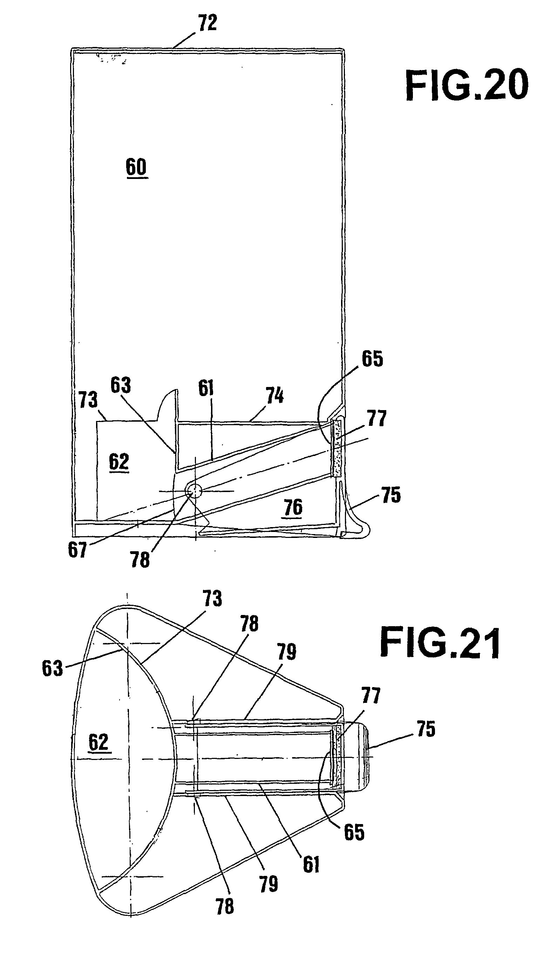

La sixième forme d'exécution donnée en exemple sur la base des fig. 20 et 21, est semblable sur de nombreux points à la cinquième et les constituants identiques seront désignés par les mêmes chiffres de référence. Ainsi, le distributeur proprement dit est disposé à la base du récipient 60 et comporte le conduit 61 avec l'ouverture de sortie 65 et l'ouverture d'entrée 67 débouchant dans le logement de dosage 62 délimité par le segment de la paroi 63. Toutefois, ce segment de paroi présente ici un bord supérieur 73 qui est plat à ses deux extrémités et incurvé convexe au centre et les éléments extrêmes se trouvent à la même hauteur qu'un fond plat 74 fermant l'espace interne du récipient 60 vers le bas.

Le distributeur-doseur de cette forme d'exécution est aussi pourvu d'un obturateur basculant désigné ici par le chiffre 75. Cet organe est constitué d'une pièce 76 en forme d'étrier avec deux joues parallèles et une paroi frontale munie d'un prolongement replié pour former un élément de préhension. La paroi frontale est garnie d'une plaque mince de mousse de plastique 77 placée de manière à venir s'appuyer contre l'ouverture 65 lorsque l'obturateur est en position de fermeture. Les extrémités des joues sont pourvues de pivots 78 en saillie sur leurs faces externes de manière à s'engager dans des ouvertures percées dans deux éléments de paroi verticaux 79 qui délimitent un logement de manoeuvre sous le récipient 60. A partir de la position de la fig. 20, la manoeuvre de l'obturateur 75 au moyen de l'élément de préhension en avant de la paroi frontale fait pivoter l'étrier 76 autour de l'axe commun des pivots 78 et amène l'obturateur dans une position analogue à celle de la fig. 17.

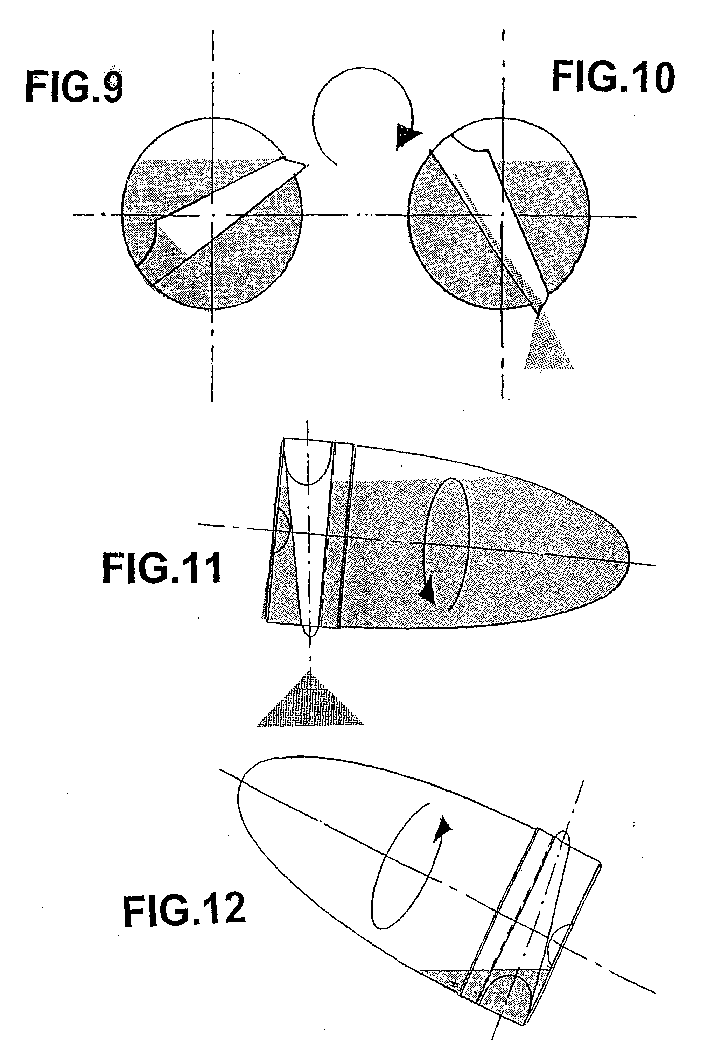

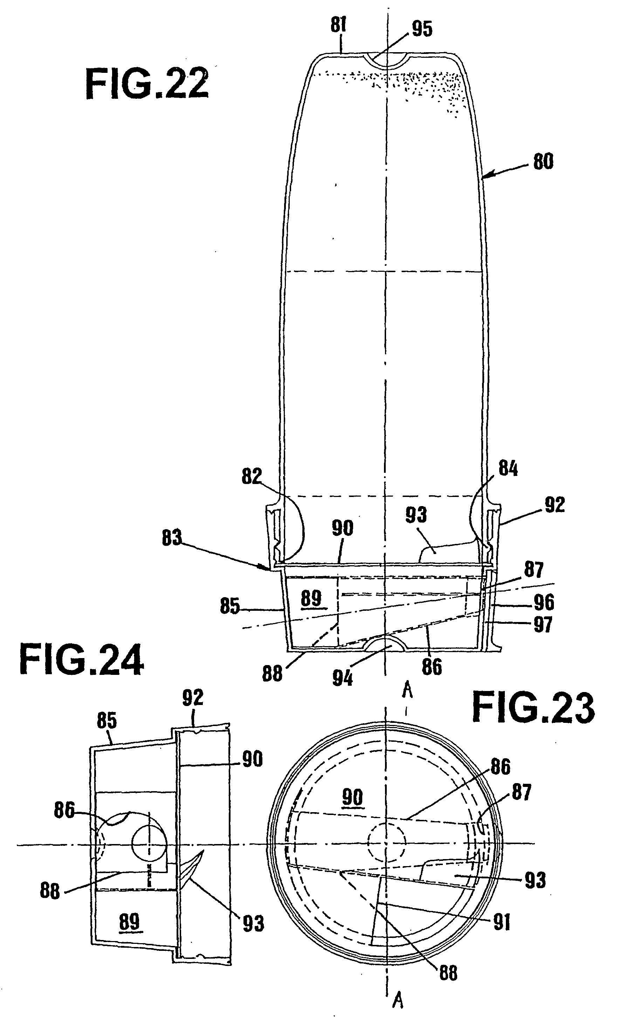

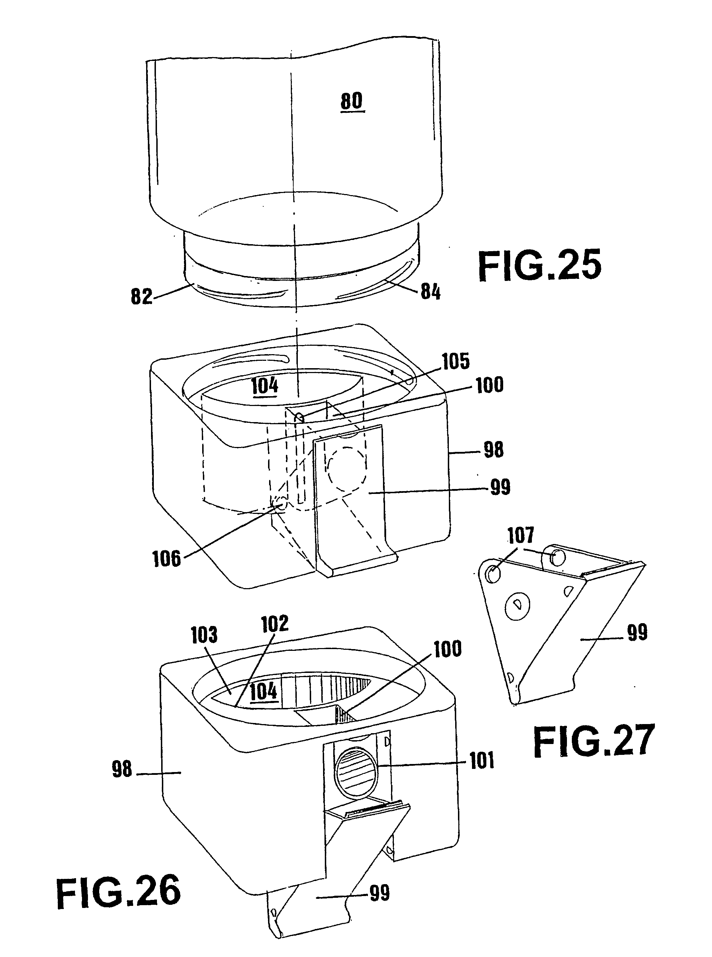

La forme d'exécution des figures 22 à 24 et sa variante des figures 25 à 27 ont en commun avec celles des fig. 1 à 12 le fait que le dispositif distributeur - doseur proprement dit est séparable du récipient contenant le produit en particules. Ainsi, le récipient cylindrique à paroi bombée 80 des fig. 22 et 23 est conçu de manière à être présenté à la vente dans une position verticale mais avec son fond 81 en bas et le bord 82 de sa paroi en haut. En outre, le dispositif distributeur - doseur 83 (fig. 24) est séparé du conditionnement. Il peut être acquis à part. Une membrane par exemple en papier d'aluminium recouvre étroitement le bord 82 et un couvercle usuel (non représenté) est vissé sur le pas de vis 84 du bocal 80. Le dispositif distributeur - doseur 83 doit donc être posé sur le bocal 80 avant l'emploi. Il est équipé dans cette forme d'exécution, d'un organe en forme d'éperon (décrit plus loin) destiné à arracher la membrane de fermeture du bocal 80 lors de sa mise en place.

La structure du dispositif 83 est visible aux fig. 22 à 24. Elle comporte dans un récipient cylindrique de faible hauteur à paroi latérale 85 un élément de conduit transversal 86 qui s'étend diamétralement depuis une ouverture de sortie 87 située dans la paroi 85 en s'élargissant progressivement jusqu'à une ouverture d'entrée 88 débouchant dans un logement de dosage 89 partiellement recouvert par un fond plat 90 qui présente une découpure 91 triangulaire avec un côté curviligne faisant communiquer le logement de dosage 89 avec l'espace intérieur du bocal quand le dispositif distributeur - doseur est en place sur le bocal 80. La paroi 85 se prolonge vers le haut par un rebord 92 avec un filetage interne qui s'accroche au filetage 84 lors de la mise en place du dispositif 83. On voit que lors de ce mouvement, l'éperon 93 qui s'étend en saillie au-dessus du fond 90 arrache la membrane de fermeture du bocal 80, de sorte que le logement de dosage 89 communique largement avec l'espace interne du récipient 80. Les deux cuvettes 94 et 95 aux extrémités de l'axe de symétrie de l'ensemble récipient et distributeur permettent de manipuler ce dernier à volonté pour amener la dose de produit en particules voulue dans le logement de dosage.

L'ouverture de sortie 87 est normalement obturée dans cette forme d'exécution par un clapet coulissant 96 guidé entre deux nervures parallèles 97 en saillie sur la face extérieure de la paroi 85.

Finalement, les fig. 25 à 27 représentent une variante de la septième forme d'exécution dans laquelle le bocal 80 sera de préférence en verre et le distributeur - doseur est un étrier basculant semblable à l'étrier 75 avec deux joues parallèles triangulaires et une paroi frontale plane, les reliant de manière rigide. Le conduit transversal de dosage 100 possède une ouverture de sortie circulaire 101 située au centre d'une des faces planes extérieures du corps de distributeur 98 et s'étend radialement avec une section constante, jusqu'à une paroi arquée 102 délimitant dans le corps 98, avec une paroi homologue 103, un logement de dosage 104. Ce dernier communique par une ouverture d'entrée également circulaire. De plus, le conduit 100 est ouvert dans sa face supérieure. Cette ouverture supérieure et celle du logement 104 se trouvent, comme on le voit aux fig. 25 et 26, dans une surface plane 106 du corps 98 qui a un contour circulaire et vient s'appuyer sur le bord circulaire 82 lors du vissage du distributeur 98 sur le bocal 80. Des pivots saillants 106 sont formés dans les faces planes et parallèles qui limitent dans le corps 98 les échancrures recevant les joues de l'étrier 99. Ces pivots saillants assurent le pivotement de l'étrier dans les forures 107 (fig. 27). Comme dans les autres formes d'exécution pourvues d'obturateurs basculants, des éléments saillants sont prévus sur les faces latérales des étriers pour assurer leur maintien soit en position ouverte, soit en position fermée, par un effet de frottement. Enfin, on voit qu'à la fig. 25, l'obturateur 99 est représenté en position fermée, le corps 98 du distributeur étant placé en regard de l'ouverture du bocal 80. A la fig. 26, le corps du distributeur est vu indépendamment du bocal, l'obturateur étant en position ouverte.

Comme on le voit sur les dessins, les obturateurs basculant 66, 75 et coulissant 96 sont conformés et disposés de façon à fermer automatiquement l'orifice de sortie 65, 87, 101 lorsque l'on repose le récipient après utilisation.

On constate que les diverses formes de réalisation décrites et évoquées ci-dessus présentent de multiples avantages : l'ensemble forme un assemblage rigide et qui hormis l'obturateur ne comporte aucune pièce mobile. Cet assemblage peut être déplacé, renversé, agité sans difficulté de sorte que le produit en particules reste déformable, susceptible de s'écouler à travers les ouvertures décrites. Un dimensionnement judicieux du conduit et des ouvertures assure un déroulement régulier des opérations de distribution et de dosage. En pratique le conduit distributeur-doseur aura par exemple des diamètres d'extrémités de 8 à 15 mm et une longueur de 6 à 8 cm.

Les produits avec lesquels les dispositifs décrits seront avantageusement utilisés, sont très nombreux et comportent principalement des produits alimentaires : poudres de sucre, de cacao, de café soluble, produits lyophilisés, épices, thé, condiments, produits en grains, comme le riz, le blé, le café, etc. Cependant ils peuvent également comprendre des produits d'usage courant, non alimentaire, des poudres à lessive, par exemple.

## Revendications

1. Dispositif distributeur-doseur d'un produit en particules associé à une extrémité frontale (3, 23, 74, 90) d'un récipient à paroi rigide contenant ledit produit, ledit récipient ayant un axe longitudinal sensiblement perpendiculaire à ladite extrémité frontale et vertical quand le récipient est posé, ledit dispositif comprenant un conduit (5; 11; 24; 43, 44; 61; 86) transversal par rapport audit axe longitudinal, solidaire d'une paroi du récipient, avec une extrémité de sortie traversant une paroi latérale en formant une ouverture latérale externe, et une extrémité d'entrée formant une ouverture interne communiquant avec l'espace intérieur du récipient contenant ledit produit, **caractérisé en ce que** le conduit transversal traverse le récipient de part en part et **en ce que** l'ouverture interne (6; 19; 21; 26) est ménagée latéralement dans la paroi dudit conduit transversal, sensiblement parallèlement audit axe longitudinal et sur toute la hauteur dudit conduit transversal, de façon que ladite ouverture interne constitue avec la paroi du conduit transversal située en regard de l'ouverture interne et avec une portion de la paroi du récipient un logement de dosage (62; 89; 104), de manière à permettre le passage d'une quantité dosée du produit en particules dans le conduit transversal, par pivotement du récipient autour dudit axe longitudinal, ledit axe étant maintenu en position sensiblement horizontale.

2. Dispositif selon la revendication 1, **caractérisé en ce qu'**il comprend un obturateur mobile (29; 66, 70; 75, 76, 77; 96; 99) permettant d'obturer ladite ouverture externe (65; 87; 101), monté sur ledit récipient, conformé et disposé à ladite extrémité frontale de façon à fermer automatiquement ladite ouverture externe lorsqu'on repose le récipient sur son extrémité frontale.

3. Dispositif selon la revendication 1 ou 2, **caractérisé en ce que** l'ouverture interne (6; 19, 21; 26) dudit conduit transversal est plus grande que l'ouverture externe (8; 22; 27 ; 45, 46).

4. Dispositif selon la revendication 3, **caractérisé en ce que** le contour de l'ouverture interne (6a; 26) s'étend selon un plan oblique par rapport à l'axe du conduit (5; 24) et/ou **en ce que** l'ouverture de sortie (22; 27) est munie d'un prolongement en forme de goulotte (20; 31).

5. Dispositif selon l'une des revendications 2 à 4, **caractérisé en ce que** ledit obturateur mobile (66, 70; 77; 96; 99) est constitué d'un matériau légèrement élastique, de manière à obturer de façon étanche ledit conduit transversal en s'appuyant contre ladite ouverture externe (65; 87; 101).

6. Dispositif selon la revendication 5, **caractérisé en ce que** ledit obturateur mobile est un obturateur basculant (66; 75) comportant un support en forme d'étrier à deux branches sensiblement parallèles montées en articulation sur ledit conduit transversal ou à proximité dudit conduit.

7. Dispositif selon la revendication 6, **caractérisé en ce que** l'ouverture extérieure est circulaire et que l'élément d'obturation de l'obturateur est une bille (70) en matériau légèrement élastique venant s'appuyer sur son pourtour.

8. Dispositif selon la revendication 6, **caractérisé en ce que** l'élément d'obturation de l'obturateur comporte une plaque mince de mousse plastique (77) placée de façon à venir s'appuyer contre l'ouverture (65) lorsque l'obturateur est en position de fermeture.

9. Dispositif selon la revendication 6, **caractérisé en ce que** ledit obturateur mobile est un obturateur à clapet coulissant (96), guidé entre deux nervures parallèles (97), de la paroi (85) du récipient.

10. Dispositif selon l'une quelconque des revendications 1 à 9, **caractérisé en ce qu'**il constitue un élément (3, 83, 98) fixé de manière amovible au corps du récipient.

11. Dispositif selon l'une quelconque des revendications précédentes, **caractérisé en ce qu'**il constitue un élément intégré à l'extrémité frontale inférieure du récipient.

## Patentansprüche

1. Vorrichtung zum dosierten Spenden eines Produktes in Teilchenform, mit einer vorderen Endseite (3, 23, 74, 90) eines Aufnahmebehälters mit steifer Wand, der das Produkt enthält, wobei der Aufnahmebehälter eine Längsachse aufweist, die im Wesentlichen senkrecht zu der vorderen Endseite und vertikal ist, wenn der Aufnahmebehälter abgestellt ist, wobei die Vorrichtung eine Leitung (5; 11; 24; 43, 44; 61; 86) aufweist, die quer zur besagten Längsachse verläuft, fest mit einer Wand des Aufnahmebehälters verbunden ist, ein Austrittsende, das eine Seitenwand durchstößt und eine seitliche externe Öffnung aufweist, und ein Eintrittsende mit einer internen Öffnung aufweist, die mit dem Innenraum des das Produkt enthaltenden Aufnahmebehälters kommuniziert, **dadurch gekennzeichnet, dass** die Querleitung den Aufnahmebehälter vollständig durchquert, und dass die interne Öffnung (6; 19; 21; 26) seitlich in der Wand der Querleitung im Wesentlichen parallel zu der besagten Längsachse über die gesamte Höhe der Querleitung angeordnet ist, derart dass die interne Öffnung mit der Wand der Querleitung, die der internen Öffnung gegenüber liegt, und mit einem Bereich der Wand des Aufnahmebehälters ein Dosierabteil (62; 89; 104) bildet, um den Durchgang einer dosierten Menge des Produktes in Teilchenform in der Querleitung durch Schwenken des Aufnahmebehälters um die besagte Längsachse zu erlauben, wobei die besagte Längsachse in einer im Wesentlichen horizontalen Position gehalten wird.

2. Vorrichtung nach Anspruch 1, **dadurch gekennzeichnet, dass** sie einen beweglichen Verschluss (29; 66, 70; 75, 76, 77; 96; 99) aufweist, mit dem die externe Öffnung (65; 87; 101) verschlossen werden kann und der an dem Aufnahmebehälter montiert ist und formmässig an die vordere Endseite angepasst sowie an dieser angeordnet ist, um automatisch die externe Öffnung zu verschliessen, wenn der Aufnahmebehälter auf seine vordere Endseite gestellt wird.

3. Vorrichtung nach Anspruch 1 oder 2, **dadurch gekennzeichnet, dass** die interne Öffnung (6; 19, 21; 26) der Querleitung größer ist als die externe Öffnung (8; 22; 27; 45, 46).

4. Vorrichtung nach Anspruch 3, **dadurch gekennzeichnet, dass** die Kontur der internen Öffnung (6a; 26) sich in einer in Bezug auf die Achse der Leitung (5; 24) schrägen Ebene erstreckt und/oder dass die Austrittsöffnung (22; 27) mit einer Verlängerung in Form eine Gießschnauze (20; 31) versehen ist.

5. Vorrichtung nach einem der Ansprüche 2 bis 4, **dadurch gekennzeichnet, dass** der bewegliche Verschluss (66, 70; 77; 96; 99) aus einem leicht elastischen Material gebildet ist, um die Querleitung eng zu verschließen, indem es sich gegen die externe Öffnung (65; 87; 101) anlegt.

6. Vorrichtung nach Anspruch 5, **dadurch gekennzeichnet, dass** der bewegliche Verschluss ein Schwenkverschluss (66; 75) ist, der einen Träger in Form eines Bügels mit zwei im Wesentlichen parallelen Armen aufweist, die schwenkbar auf der Querleitung oder in der Nähe dieser Leitung montiert sind.

7. Vorrichtung nach Anspruch 6, **dadurch gekennzeichnet, dass** die externe Öffnung kreisförmig ist, und dass das Verschlusselement des Verschlusses eine Kugel (70) aus einem leicht elastischen Material ist und sich an ihren Umfang anlegen kann.

8. Vorrichtung nach Anspruch 6, **dadurch gekennzeichnet, dass** das Verschlusselement des Verschlusses eine kleine Platte aus weichem Schaumstoff (77) aufweist, die derart platziert ist, dass sie in Anlage an die Öffnung (65) kommt, wenn der Verschluss in einer Schließstellung ist.

9. Vorrichtung nach Anspruch 6, **dadurch gekennzeichnet, dass** der bewegliche Verschluss ein Verschluss mit einer verschiebbaren Klappe (96) ist, die zwischen zwei parallelen Rippen (97) der Wand (85) des Aufnahmebehälters geführt ist.

10. Vorrichtung nach einem der Ansprüche 1 bis 9, **dadurch gekennzeichnet, dass** sie ein Element (3, 83, 98) bildet, das unbeweglich auf dem Gehäuse des Aufnahmebehälters befestigt ist.

11. Vorrichtung nach einem der vorhergehenden Ansprüche, **dadurch gekennzeichnet, dass** sie ein mit der vorderen Endseite unterhalb des Aufnahmebehälters integriertes Element bildet.

## Claims

1. A device for dispensing and measuring out a product in particle form associated with the front end (3, 23, 74, 90) of a receptacle with a rigid wall containing the said product, the said receptacle having a longitudinal axis substantially perpendicular to the said front end and vertical when the receptacle is at rest, the said device comprising a conduit (5; 11; 24; 43, 44; 61; 86) transverse with respect to the said longitudinal axis, integral with one wall of the receptacle, with an outlet end passing through a lateral wall, forming an external lateral opening, and an inlet end forming an internal opening communicating with the internal space of the receptacle containing the said product, **characterised in that** the transverse conduit passes right through the receptacle and **in that** the internal opening (6; 19; 21; 26) is formed laterally in the wall of the said transverse conduit, substantially parallel to the said longitudinal axis and over the entire height of the said transverse conduit, so that the said internal opening constitutes, with the wall of the transverse conduit situated opposite the internal opening and with a portion of the wall of the receptacle, a measuring-out space (62; 89; 104), so as to allow the passage of a measured-out quantity of the product in particle form in the transverse conduit, by pivoting of the receptacle about the said longitudinal axis, the said axis being kept in a substantially horizontal position.

2. A device according to Claim 1, **characterised in that** it comprises a movable obturator (29; 66, 70; 75, 76, 77; 96; 99) for closing off the said external opening (65; 87; 101), mounted on the said receptacle, shaped and disposed at the said front end so as to automatically close off the said external opening when the receptacle is rested on its front end.

3. A device according to Claim 1 or 2, **characterised in that** the internal opening (6; 19, 21; 26) of the said transverse conduit is larger than the external opening (8; 22; 27; 45, 46).

4. A device according to Claim 3, **characterised in that** the contour of the internal opening (6a; 26) extends in a plane oblique with respect to the axis of the conduit (5; 24) and/or **in that** the outlet opening (22; 27) is provided with an extension in the form of a spout (20; 31).

5. A device according to one of Claims 2 to 4, **characterised in that** the said movable obturator (66, 70; 77; 96; 99) is formed from a slightly elastic material, so as to sealingly close off the said transverse conduit by pressing against the said external opening (65; 87; 101).

6. A device according to Claim 5, **characterised in that** the said movable obturator is a tilting obturator (66; 75) comprising a support in the form of a stirrup with two substantially parallel arms mounted for articulation on the said transverse conduit or close to the said conduit.

7. A device according to Claim 6, **characterised in that** the external opening is circular and **in that** the closure element of the obturator is a ball (70) made from slightly elastic material pressing on its periphery.

8. A device according to Claim 6, **characterised in that** the closure element of the obturator comprises a thin sheet of plastic foam (77) placed so as to press against the opening (65) when the obturator is in the closure position.

9. A device according to Claim 6, **characterised in that** the said movable obturator is an obturator with a sliding shutter (96), guided between two parallel ribs (97), of the wall (85) of the receptacle.

10. A device according to any one of Claims 1 to 9, **characterised in that** it constitutes an element (3, 83, 98) fixed removably to the body of the receptacle.

11. A device according to any one of the preceding claims, **characterised in that** it constitutes an element integrated in the bottom front end of the receptacle.
